# FASCICULE DE BREVET EUROPEEN

(11) **EP 2 763 893 B1**
(45) Date de publication et mention de la délivrance du brevet: **11.01.2017**
(21) Numéro de dépôt: 12781132.1
(22) Date de dépôt: 03.10.2012
(51) Int. Cl.: B64C 11/30, B64C 11/38, F01D 7/00

(54) **TURBOMACHINE A HELICE(S) POUR AERONEF AVEC SYSTEME POUR CHANGER LE PAS DE L'HELICE**
FLUGZEUGPROPELLERTRIEBWERK MIT PROPELLERVERSTELLVORRICHTUNG
AIRCRAFT PROPELLER ENGINE WITH PITCH-CHANGING MECHANISM

(30) Priorité: 03.10.2011 FR 1158891
(43) Date de publication de la demande: 13.08.2014
(73) Titulaire: Safran Aircraft Engines, 75015 Paris (FR); GE Aviation Systems Limited, Bishops Cleeve Cheltenham Gloucestershire GL52 8SF (GB)
(72) Inventeur: ESCURE, Didier, René, André, F-77550 Moissy-Cramayel Cedex (FR); BOCQUET, Denis, Louis, F-77550 Moissy-Cramayel Cedex (FR); CHARIER, Gilles, Alain, F-77550 Moissy-Cramayel Cedex (FR); SZYMANDERA, Aleksander, PL-02654 Varsovie (PL); MALITKA, Marek, PL-01651 Varsovie (PL); SIKORSKI, Jan, PL-05077 Varsovie (PL); CARRINGTON, Christopher, Highnam Gloucester GLD 8EW (GB)
(74) Mandataire: Gevers & Orès
(86) Numéro de dépôt international: PCT/FR2012/052241
(87) Numéro de publication internationale: WO 2013/050704

(56) Documents cités:
- EP-A1- 1 921 325
- WO-A1-2010/130893
- WO-A2-2010/136686
- FR-A1- 2 551 023

## Description

La présente invention concerne une turbomachine à hélice(s) pour aéronef avec système pour changer le pas de l'hélice.

Plus particulièrement, quoique non exclusivement, la turbomachine est un turbomoteur équipé d'hélices de propulsion contrarotatives, et désigné par l'expression anglaise « open rotor » ou « unducted fan », mais pourrait être également, sans sortir du cadre de l'invention, un turbopropulseur à une hélice ou à plusieurs hélices propulsives, le système de changement du pas des pales s'adaptant indifféremment à l'hélice ou à chaque hélice de la turbomachine.

Un turbomoteur du type open rotor comprend principalement, à l'intérieur d'une nacelle cylindrique fixe portée par la structure de l'aéronef (comme la partie arrière du fuselage d'un avion), une partie « générateur de gaz » et, alignée derrière ou devant celle-ci, une partie « propulsion ». Cette dernière comporte deux hélices coaxiales et contrarotatives, respectivement amont (avant) et aval (arrière) qui sont entraînées, en rotation inverse l'une de l'autre, par un réducteur épicycloïdal entraîné par une turbine basse pression de la partie générateur de gaz, et dont les pales des hélices s'étendent sensiblement radialement à l'extérieur de la nacelle.

Chaque hélice comprend usuellement un moyeu à anneau polygonal extérieur, reçu de façon rotative dans la nacelle fixe et ayant des logements cylindriques radiaux répartis à sa périphérie autour de l'axe longitudinal du turbomoteur. Dans les logements de chaque anneau sont reçus les pieds des pales.

Pour permettre le fonctionnement optimal du turbomoteur selon les différentes phases de vol rencontrées, les pales des hélices contrarotatives peuvent tourner dans les logements radiaux des anneaux. Pour cela, elles sont entraînées en rotation autour de leurs axes de pivot respectifs, par un système approprié permettant de faire varier le calage des pales en cours de vol, c'est-à-dire le pas des hélices.

Ce système de changement du pas des pales des hélices couvre une plage angulaire de rotation comprise entre deux positions extrêmes, à savoir une position extrême dite de « reverse » pour laquelle les pales dépassent par exemple de 30° le plan transversal à l'axe du turbomoteur (la direction d'avance de l'avion) pour participer au freinage de l'aéronef, à la manière des inverseurs de poussée usuels, et une position extrême dite de « mise en drapeau » pour laquelle les pales sont alors effacées au mieux par rapport à la direction d'avance de l'avion, par exemple, en cas de panne moteur et offrir ainsi le moins de résistance (traînée) possible. La course angulaire des pales entre les positions drapeau et reverse est par exemple de l'ordre d'environ 120°.

Différentes solutions ont été proposées pour changer le pas des pales des hélices sur des turbomoteurs « open rotor » ou autres.

Par exemple, on connaît par le document FR 2 908 451, un turbomoteur dont le système de changement d'orientation des pales de chaque hélice comprend avantageusement un seul vérin annulaire monté par son cylindre, sur le moyeu à anneau de l'hélice, tandis que son piston est relié, par un mécanisme de liaison du système associé au vérin, aux pieds des différentes pales. Le déplacement du piston par suite de la commande fluidique du vérin annulaire assure le pivotement angulaire souhaité des pales par le mécanisme de liaison en faisant varier leur pas.

Bien que donnant des résultats satisfaisants, une telle solution implique un vérin annulaire et donc un cylindre, partie fixe, et une tige de piston, partie mobile, de grand diamètre du fait de son montage sur le moyeu même de l'hélice, ainsi qu'une masse nécessairement élevée par son grand diamètre d'autant plus qu'il doit être alors renforcé pour résister aux efforts centrifuges et éviter les risques d'ovalisation par la rotation de l'hélice associée.

Par ailleurs, des déformations et problèmes d'étanchéité tendent à apparaître par le montage tournant du vérin annulaire sur le moyeu de l'hélice et des éléments fluidiques utilisés (joints tournants, etc..) dans cet environnement sévère (contraintes mécaniques et thermiques importantes, vitesse de rotation élevée, etc..). Enfin, le mécanisme de liaison du système, composé de rotules au niveau des pieds des pales et de réceptacles coulissant dans une gorge annulaire du piston, conduit à des phénomènes d'usure qu'il convient de surveiller à l'usage pour éviter les risques de coincement.

On connaît également par le document FR2551023, un mécanisme de changement de pas pour ensemble d'hélice d'avion.

La présente invention a pour but de remédier à ces inconvénients et concerne une turbomachine à hélice(s) pour aéronef, dont la conception du système de changement du pas des pales de l'hélice limite les problèmes liés notamment à l'étanchéité et à l'encombrement tout en garantissant une fiabilité de fonctionnement à l'usage.

A cet effet, la turbomachine à au moins une hélice pour aéronef, du type comportant un système pour changer le pas des pales de ladite hélice comprenant un vérin fluidique annulaire à commande linéaire et un mécanisme de liaison reliant le vérin aux pales de l'hélice pour en changer l'orientation, est remarquable, selon l'invention, par le fait :
- que ledit vérin annulaire du système est monté solidaire d'un carter fixe supportant ladite hélice, interne à celle-ci et proche de l'axe longitudinal de la turbomachine, par opposition aux pales montées dans un moyeu rotatif externe de l'hélice,
- que ledit mécanisme de liaison reliant la partie mobile dudit vérin annulaire aux pales du moyeu rotatif de l'hélice, comporte un palier de transfert intermédiaire fixé, d'un côté, à la partie mobile du vérin et coopérant, de l'autre côté, avec un moyen de liaison du mécanisme aux pales du moyeu rotatif, de telle façon que le palier de transfert du mécanisme entraîné en rotation transmette le déplacement en translation de la partie mobile du vérin fixe, au moyen de liaison du mécanisme rotatif pour changer l'orientation des pales de l'hélice,
- que le moyen de liaison comporte un ensemble de bielles ou analogues réparties autour du vérin annulaire et reliées, d'un côté, au palier de transfert et, de l'autre côté, à des arbres radiaux rotatifs solidaires respectivement des pieds des pales de ladite hélice, de sorte à entraîner, par suite du déplacement en translation des bielles du mécanisme de liaison, la rotation des arbres radiaux et des pales associées, et
- que lesdites bielles sont articulées à une couronne du moyen de liaison, liée en rotation à la paroi cylindrique rotative de l'hélice et axialement libre avec celle-ci.

Ainsi, grâce à l'invention, par son agencement sur un carter fixe ou stator interne par rapport au moyeu de l'hélice, le vérin annulaire du système d'orientation a une dimension forcément réduite et, de là, sa masse s'en trouve diminuée. De la sorte, outre une réduction de la masse de la turbomachine, le vérin est moins sensible aux efforts centrifuges de la turbomachine et, donc, aux variations dimensionnelles, sans avoir recours à des renforts initialement nécessaires dans la réalisation antérieure. De plus, comme il est fixe, solidaire du stator, son étanchéité est rendue plus facile diminuant de ce fait drastiquement les risques de fuite de par la suppression des éléments fluidiques et autre palier de transfert hydraulique présents lorsqu'il est lié au moyeu rotatif ou rotor de l'hélice.

En conséquence, le système offre une réalisation simplifiée avec un seul vérin et un mécanisme à palier et à moyen de liaison totalement mécanique, permettant de « passer » une translation du vérin en une rotation des pales avec une grande fiabilité de fonctionnement (risque de fuite quasi-nul, le vérin étant fixe) et de masse maîtrisée, en s'affranchissant des inconvénients des solutions antérieures par des vérins annulaires dimensionnellement imposants et lourds, directement solidaires du moyeu de l'hélice avec des efforts centrifuge pénalisants. En outre, une réalisation du moyen de liaison avec bielles garantit sécurité et fiabilité de fonctionnement à l'usage sans coulissement et/ou frottement de pièces les unes par rapport aux autres comme dans la réalisation antérieure.

De préférence, le palier de transfert intermédiaire du mécanisme de liaison est un roulement à billes ou analogues, dont la bague interne est montée axialement solidaire sur la partie mobile du vérin annulaire, tandis que la bague externe coopère avec le moyen de liaison du mécanisme lié en rotation à une paroi cylindrique rotative solidaire de l'hélice et libre en translation le long de cette paroi, pour suivre le déplacement du vérin. On remarque la simplicité de réalisation du palier garantissant une fiabilité de fonctionnement optimale. Pour passer des efforts sans jeu entre le vérin et les pales de l'hélice, on peut utiliser un palier de transfert à double rangée de billes ou analogues.

Plus particulièrement, lesdites bielles sont articulées, d'une part, à la couronne du moyen de liaison et, d'autre part, à des manetons transversaux prévus sur les arbres rotatifs des pales. Ainsi, le pivotement des arbres des pales s'effectue par un mécanisme du type bielle-maneton garantissant simplicité et fiabilité de fonctionnement.

Avantageusement, la liaison entre la couronne du moyen de liaison du mécanisme, dans laquelle est logé le palier de transfert, et la paroi cylindrique rotative de l'hélice, est du type par cannelures ou analogues parallèles à l'axe de l'hélice. Ainsi, une telle liaison est particulièrement fiable pour guider le mécanisme de liaison en translation par le déplacement imposé par le vérin, tout en pouvant tourner avec l'hélice par la paroi cylindrique rotative solidaire de l'hélice, de façon à modifier l'orientation des pales par ledit moyen de liaison.

Pour réduire au mieux l'encombrement du système dans la turbomachine, le vérin annulaire de commande est agencé sensiblement à l'aplomb du moyeu de l'hélice, ce qui diminue notamment les longueurs des bielles. Et, pour empêcher la rotation de la partie mobile, liée au palier de transfert, par rapport à la partie fixe du vérin, les parties mobile et fixe du vérin annulaire sont immobilisées en rotation l'une par rapport à l'autre par l'intermédiaire d'au moins une tige axiale qui traverse les deux parties parallèlement audit vérin.

Les figures du dessin annexé feront bien comprendre comment l'invention peut être réalisée.
La figure 1 est une vue schématique en coupe axiale d'un turbomoteur à soufflante non carénée localisée en aval du générateur de gaz, incorporant un système de changement du pas des pales conforme à l'invention pour l'une des hélices de la soufflante.
La figure 2 est une demi-coupe axiale de l'arrière du turbomoteur avec ledit système de changement de pas de l'hélice amont, conforme à l'invention, dans une position extrême pour laquelle la pale représentée de l'hélice est en position dite « drapeau ».
La figure 3 est une demi-coupe axiale de l'arrière du turbomoteur avec ledit système de changement de pas de l'hélice amont, conforme à l'invention, dans l'autre position extrême pour laquelle la pale représentée de l'hélice est en position dite « reverse ».

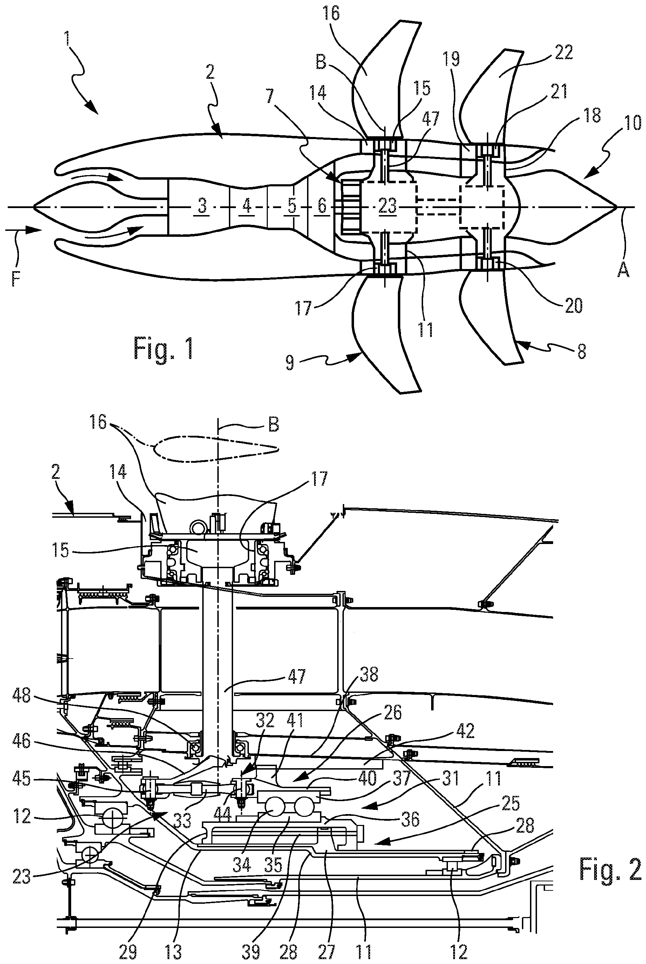

On se réfère tout d'abord à la figure 1 qui représente schématiquement une turbomachine telle qu'un turbomoteur à soufflante non carénée 1, désigné sous l'expression anglaise « open rotor » ou « unducted fan ». Ce turbomoteur comporte usuellement, d'amont en aval selon le sens d'écoulement du flux gazeux F à l'intérieur d'une nacelle 2 du turbomoteur, un ou deux compresseurs 3 selon l'architecture du générateur de gaz à simple ou double étage, une chambre annulaire de combustion 4, une turbine haute pression ou deux turbines haute pression et à pression intermédiaire 5 selon ladite architecture, et une turbine libre basse pression 6 qui entraîne, par l'intermédiaire d'un réducteur ou boîtier à trains épicycloïdaux 7 et de façon contrarotative, deux hélices 8, 9 alignées coaxialement selon l'axe longitudinal A du turbomoteur et constituant la soufflante. Une version alternative non représentée du turbomoteur pourrait induire, sans sortir du cadre de l'invention, la localisation des hélices 8 et 9 et du boîtier à trains épicycloïdaux 7 en amont du générateur de gaz, l'ensemble étant relié à la turbine libre basse pression 6 par un arbre interne.

Les hélices, à savoir une hélice aval 8 et une hélice amont 9, sont disposées dans des plans parallèles radiaux, perpendiculaires à l'axe A, et tournent par le biais de la turbine basse pression 6 et du réducteur 7 dans des sens de rotation opposés.

Pour cela, comme le montrent les figures 1 et 2, l'hélice amont 9 comporte un carter cylindrique rotatif 11, lié en rotation à une partie correspondante du réducteur pour tourner dans un sens. Ce carter rotatif 11 est supporté par des roulements 12 sur un carter cylindrique fixe 13. Le carter 11 se termine, du coté opposé au réducteur 7, par un moyeu rotatif à anneau polygonal 14 logé de façon usuelle dans la nacelle 2 et recevant dans des logements cylindriques 17, les pieds 15 des pales 16 de l'hélice 9, lesquelles pales font ainsi saillie extérieurement de la nacelle.

De façon semblable, l'hélice aval 8 comporte un carter cylindrique rotatif 18, d'un coté lié en rotation à une autre partie du réducteur 7, pour tourner alors dans le sens opposé. Ce carter rotatif 18 est supporté là aussi par des roulements sur le carter cylindrique fixe 13 et à l'intérieur du carter rotatif 17. De l'autre côté, le carter 18 se termine par un moyeu rotatif à anneau polygonal 19 recevant, de façon analogue que précédemment, dans des logements 20, les pieds 21 des pales 22 de l'hélice 8.

En fonctionnement, et brièvement, le flux d'air F entrant dans le turbomoteur 1 est comprimé, puis mélangé à du carburant et brûlé dans la chambre de combustion 4. Les gaz de combustion engendrés passent ensuite dans les turbines 5 et 6 pour entraîner en rotation inverse, via le réducteur épicycloïdal 7, les hélices 8, 9 qui fournissent la majeure partie de la poussée.

Les gaz de combustion sont expulsés à travers une tuyère 10 pour augmenter ainsi la poussée du turbomoteur 1.

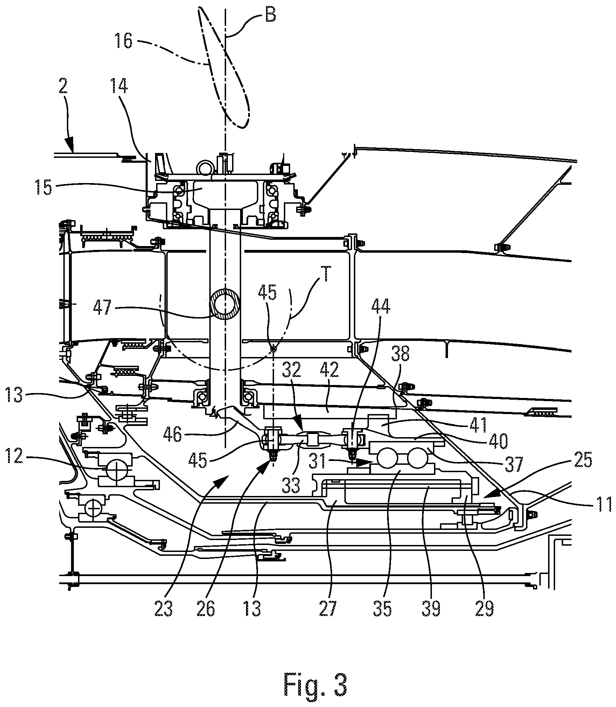

Par ailleurs, les pales 16 et 22 des hélices amont et aval sont du type à calage variable, c'est-à-dire qu'elles peuvent être orientées autour de leurs axes radiaux de pivot B grâce à un système de changement ou d'orientation 23 du pas des pales, de façon que celles-ci prennent une position angulaire optimale selon les conditions de fonctionnement du turbomoteur et les phases de vol concernées. Dans la présente description, seul le système d'orientation 23 des pales associé à l'hélice amont 9 sera décrit. L'hélice aval 8, qui n'est pas représentée sur les figures 2 et 3, pourra être équipée d'un système d'orientation des pales analogue ou différent de celui développé ci-après en liaison avec l'hélice amont.

A cet effet, comme le montrent les figures 1 et 2, le système 23 de changement du pas des pales (donc leur calage) est prévu à l'intérieur du turbomoteur 1, dans l'espace interne situé entre le carter fixe 13 et le carter rotatif 11 correspondant respectivement à une partie statique ou stator et à une partie mobile ou rotor de l'hélice 9 pour faire varier la position angulaire de pales et donc le pas de l'hélice.

Comme on le voit sur la figure 2, ce système de changement 23 comporte principalement un vérin annulaire 25 à action linéaire, selon l'axe longitudinal A du turbomoteur, et un mécanisme de liaison 26 reliant le vérin aux pieds 15 des pales 16 de l'hélice amont 9.

Le vérin annulaire 25 entoure le carter cylindrique statique 13 en étant solidaire de celui-ci. En particulier, la partie fixe (ou cylindre) 27 de ce vérin est maintenue en position appropriée sur le carter statique 13 par tout moyen approprié, de sorte à être immobilisée en rotation et en translation par rapport à celui-ci. Pour cela, des butées 28 sous forme d'un épaulement et d'une bague sont prévues. Et sa partie mobile (ou tige de piston) 29 est située autour de la partie fixe 27 pour pouvoir se déplacer linéairement, selon l'axe A, sous l'action de la commande hydraulique du vérin 25, non représentée.

On constate ainsi que, comme le vérin annulaire 25 est situé sur une partie du carter fixe 13 proche de l'axe A du turbomoteur 1 et à l'intérieur du moyeu rotatif 14, son encombrement et sa masse sont réduits comparativement au montage de celui-ci directement sur ce moyeu à anneau polygonal du carter rotatif 11.

Dans une autre configuration non illustrée, le vérin pourrait être séparé du carter ou support fixe 13, par exemple, au moyen de brides de liaison ou analogues, et constituer ainsi un corps de vérin séparé, fixe, éventuellement monobloc.

En vue d'empêcher la rotation de la partie mobile 29 (ou tige de piston) par rapport à la partie fixe 27 (ou cylindre), au moins une tige axiale 39 est agencée entre les deux parties 27, 29 en les traversant pour les immobiliser ainsi en rotation l'une par rapport à l'autre.

Autour de cette tige de piston 29 externe au vérin annulaire 25 est montée l'autre partie du système 23, à savoir le mécanisme de liaison 26 entre le vérin et les pales, comprenant un palier de transfert de mouvement 31 et un moyen de liaison 32 sous forme notamment d'un ensemble de bielles articulées 33.

Dans ce mode de réalisation, le palier 31 est un roulement à deux rangées de billes 34 avec sa bague interne 35 qui est portée par la partie mobile 29 du vérin annulaire fixe. Des butées 36 sont également prévues sur cette partie mobile 29 et servent à limiter les déplacements extrêmes. La tige de piston doit pouvoir se positionner n'importe où dans sa course. Et la bague externe 37 du roulement est tournée vers une paroi cylindrique rotative 38 du carter rotatif 11 de l'hélice. Pour permettre au mécanisme de liaison 26 de suivre le déplacement imposé par le vérin annulaire 25, tout en tournant avec l'hélice, de manière à faire varier le pas des pales comme on le verra ultérieurement, une liaison en rotation et libre axialement selon l'axe A est prévue entre la bague externe 37 et la paroi cylindrique rotative 38.

Pour cela, le moyen de liaison 32 du mécanisme 26 comporte, entre les bielles 33 et le palier de transfert 31, une couronne 40 qui, du côté interne, entoure la bague externe 37 du palier et, du côté externe, est en relation avec l'intérieur de la paroi cylindrique 38 du carter rotatif 18 par une liaison à cannelures ou crans 41, 42 parallèles à l'axe A et donc à l'hélice. De la sorte, les cannelures 41 ménagées à l'extérieur de la couronne 40 peuvent coulisser dans celles 42 de la paroi cylindrique, sur une course permettant aux pales de pouvoir tourner entre les deux positions extrêmes définies précédemment. La bague externe 37 du palier de transfert 31 est, par ailleurs, maintenue axialement en position dans la couronne 40, et liée en rotation à celle-ci.

Le moyen de liaison 32 du mécanisme 26 comprend les bielles 33 réparties régulièrement autour du vérin annulaire 25 et qui sont destinées à agir sur les pieds des pales 16 pour les entraîner en rotation autour de leur axe B. Le nombre de bielles est identique au nombre de pales 16.

En particulier, les bielles 33 sont reliées à l'une de leurs extrémités respectives à la couronne 40 autour d'axes d'articulation 44 parallèles aux axes B des pales. Et à leur autre extrémité, les bielles 33 sont reliées, par des axes d'articulation 45 parallèles aux précédents, à des manetons 46 prévus approximativement transversalement en bout d'arbres radiaux rotatifs 47, dont l'axe géométrique correspond à l'axe de rotation B des pales, orthogonal à l'axe A. Pour cela, à l'opposé des manetons 46, les arbres radiaux 47 sont reliés aux pieds 15 des pales respectives 16, montés rotatifs dans les logements 17 de l'anneau polygonal 14. Les arbres 47 sont en outre maintenus en position radiale par des portées 48 prévues sur le carter rotatif 11 de l'hélice amont 9.

Les figures 2 et 3 illustrent par ailleurs la cinématique de fonctionnement du système 23 entre les deux positions extrêmes pouvant être occupées par les pales 16 des hélices, et représentées schématiquement en coupe transversale sur ces figures. Bien évidemment, tout autre position intermédiaire entre ces deux positions extrêmes peut être prise par les pales de l'hélice 9.

On suppose que, lorsque le système 23 se trouve dans la position illustrée sur la figure 2, pour laquelle le vérin annulaire de commande 25 est en position rentrée, les pales 16 de l'hélice amont 9 occupent la position drapeau, c'est-à-dire approximativement dans le prolongement du turbomoteur de façon à offrir le moins de résistance possible (traînée). Cette position en drapeau des pales de l'hélice est, par exemple, utilisée en cas de panne moteur et on voit, sur la figure 2, la section transversale schématisée en trait mixte d'une pale 16 en position drapeau.

Lorsque l'on souhaite modifier l'orientation des pales 16 de l'hélice amont 9, le système de changement de pas 23 agit et, à cet effet, le vérin annulaire 25 solidaire par sa partie fixe 27 du carter formant stator 13 du turbomoteur, est commandé, ce qui entraîne par le remplissage en huile sous pression de la chambre correspondante du vérin annulaire 25, le déplacement en translation de la partie mobile 29 du vérin selon la course choisie, imposée par le système de changement de pas. Dans l'exemple représenté sur la figure 3, la partie mobile 29 s'est déplacée jusqu'à se trouver dans la position sortie maximale, correspondant à la position reverse des pales 16, les tiges 39 empêchant la rotation entre les deux parties tout en permettant le coulissement de la partie mobile 29 sur la partie fixe 27.

Par la liaison axiale de la bague interne 35 avec la partie mobile 29 du vérin, le palier de transfert 31 suit la translation imposée, de sorte que la bague externe rotative 37 du roulement, immobilisée axialement avec la couronne 40 du moyen de liaison 32 du mécanisme 26, entraîne celui-ci en translation par rapport à la paroi cylindrique 38 du carter rotatif 18 par l'intermédiaire de la liaison par cannelures ou crans 41, 42. Bien évidemment, grâce à la présence du palier de transfert 31 dissociant le vérin 25 de l'hélice 9, le mécanisme de liaison 26, tout en se déplaçant en translation par la liaison à cannelures 41 et 42, tourne avec le carter 18 de l'hélice par cette même liaison 41, 42 et par les arbres radiaux 47 des pales via les bielles, alors que le vérin annulaire 25 est fixe en rotation, simplifiant entre autres les liaisons hydrauliques. Les deux rangées de billes 34 du palier permettent de transmettre sans jeu les efforts même s'ils sont importants.

Comme le montre la figure 3, par le déplacement en translation vers la droite du mécanisme de liaison 26 (palier 31 et moyen de liaison 32), les bielles 33 sont tirées par l'intermédiaire d'articulations à rotule 44 et entraînent, par des articulations à rotule opposées 45, les manetons transversaux 46 qui définissent des bras de levier à la manière d'une liaison usuelle bielle-manivelle de sorte à faciliter leur rotation. Les manetons 46 pivotent donc autour de l'axe géométrique B des arbres radiaux 47 auxquels ils sont solidaires, si bien que les pieds 15 des pales 16 tournent dans leurs logements respectifs 17 de l'anneau polygonal du moyeu rotatif 14.

On remarque que les articulations à rotule 45 associant les bielles 33 aux manetons 46, suivent alors une trajectoire circulaire T ayant pour centre les axes B des arbres radiaux 47 de pivotement des pales 16, et avec un bras de levier (distance entre l'axe de l'articulation 45 et l'axe B) important, ce qui permet de transmettre des efforts (couples) en conséquence en réduisant les efforts transitant dans les bielles et le vérin, et de pouvoir au final changer le pas des pales sans difficultés.

Les pales 16 prennent alors simultanément, par le déplacement axial de l'ensemble des bielles entraînées par le vérin, la position demandée telle que celle schématisée en coupe transversale et en trait mixte par l'une des pales sur la figure 3. Cette position extrême est la position reverse (figure 3) pour laquelle les pales ont tourné sensiblement de la plage prévue, 120° environ, par rapport à la position drapeau (figure 2) pour s'opposer ainsi à l'avance de l'avion (poussée engendrée opposée à la vitesse avion) et participer au freinage de celui-ci.

En outre, comme le vérin annulaire 25 est sensiblement situé à l'aplomb des pales de l'hélice 9, la longueur des bielles nécessaire pour faire pivoter les pales est alors avantageusement réduite, contribuant à un système de masse raisonnable.

## Revendications

1. Turbomachine à au moins une hélice pour aéronef, du type comportant un système (23) pour changer le pas des pales (16) de ladite hélice (9), comprenant un vérin fluidique annulaire (25) à commande linéaire, solidaire d'un carter fixe (13) supportant l'hélice, et un mécanisme de liaison (26) reliant le vérin annulaire aux pales du moyeu rotatif de l'hélice pour en changer l'orientation, et comporteant un palier de transfert intermédiaire (31) fixé, d'un côté, à la partie mobile (29) du vérin et coopérant, de l'autre côté, avec un moyen de liaison (32) du mécanisme aux pales du moyeu rotatif, de façon que le palier de transfert du mécanisme entraîné en rotation transmette le déplacement en translation de la partie mobile du vérin fixe, au moyen de liaison (32) du mécanisme rotatif pour changer l'orientation des pales de l'hélice,
**caractérisée par le fait que** le carter fixe (13) est interne à l'hélice et proche de l'axe longitudinal A de la turbomachine, par opposition aux pales montées dans un moyeu rotatif (14) externe de l'hélice, que ledit moyen de liaison (32) comporte un ensemble de bielles (33) réparties autour du vérin annulaire (25) et reliées, d'un côté, au palier de transfert (31) et, de l'autre côté, à des arbres radiaux rotatifs (47) solidaires respectivement des pieds des pales (16) de l'hélice (9), de sorte à entraîner, par suite du déplacement en translation des bielles du mécanisme de liaison (26), la rotation des arbres radiaux et des pales associées, et que les bielles (33) sont articulées à une couronne (40) du moyen de liaison (32) liée en rotation à la paroi cylindrique rotative (38) de l'hélice et axialement libre avec celle-ci.

2. Turbomachine selon la revendication 1, dans laquelle le palier de transfert intermédiaire (31) du mécanisme de liaison (26) est un roulement à billes, dont la bague interne (35) est montée axialement solidaire sur la partie mobile (29) du vérin annulaire, tandis que la bague externe (37) coopère avec le moyen de liaison (32) du mécanisme lié en rotation à une paroi cylindrique rotative (38) solidaire de l'hélice (9) et libre en translation le long de cette paroi, pour suivre le déplacement du vérin.

3. Turbomachine selon la revendication 2, dans laquelle le roulement (31) du palier comporte une double rangée de billes (34).

4. Turbomachine selon l'une des revendications précédentes, dans laquelle lesdites bielles (33) sont articulées, d'une part, à la couronne (40) du moyen de liaison (32), et d'autre part, à des manetons transversaux (46) prévus sur les arbres rotatifs (47) des pales.

5. Turbomachine selon la revendication précédente, dans laquelle la liaison entre la couronne (40) du moyen de liaison (32) du mécanisme, dans laquelle est logé le palier de transfert (31), et la paroi cylindrique rotative (38) de l'hélice, est du type par cannelures (41, 42) parallèles à l'axe de l'hélice.

6. Turbomachine selon l'une des revendications 1 à 5, dans laquelle le vérin annulaire de commande (25) est agencé sensiblement à l'aplomb du moyeu (14) de l'hélice (9).

7. Turbomachine selon l'une des revendications 1 à 6, dans laquelle les parties respectivement mobile (29) et fixe (27) du vérin annulaire (25) sont immobilisées en rotation l'une par rapport à l'autre par l'intermédiaire d'au moins une tige axiale (39) qui traverse les deux parties parallèlement audit vérin.

8. Turbomachine du type comportant deux hélices alignées contrarotatives, respectivement amont et aval, **caractérisée par le fait qu'**au moins l'hélice amont (9) est équipée du système (23) de changement du pas des pales (16), tel que défini selon l'une des revendications 1 à 7.

## Patentansprüche

1. Strömungsmaschine mit wenigstens einem Propeller für Luftfahrzeuge umfassend ein System (23) zum Ändern der Steigung der Flügel (16) des Propellers (9), umfassend einen fluidischen Ringzylinder (25) mit linearer Steuerung, der an einem feststehenden Gehäuse (13) zur Aufnahme des Propellers befestigt ist, und einen Verbindungsmechanismus (26) zum Verbinden des Ringzylinders mit den Flügeln der Drehnabe des Propellers zum Ändern von deren Ausrichtung, und umfassend ein zum einen mit dem beweglichen Teil (29) des Zylinders befestigten und zum anderen mit einem Verbindungsmittel (32) des Mechanismus für die Flügel der Drehnabe zusammenwirkenden Zwischenübertragungslager (31), so dass das Übertragungslager des in Drehung versetzten Mechanismus die Verschiebebewegung des beweglichen Teils des feststehenden Zylinders auf das Verbindungsmittel (32) des Drehmechanismus zum Ändern der Ausrichtung der Flügel des Propellers überträgt,
**dadurch gekennzeichnet, dass** sich das feststehende Gehäuse (13) im Propeller und in der Nähe der Längsachse A der Strömungsmaschine befindet, im Gegensatz zu den in einer Drehnabe (14) außerhalb des Propellers montierten Flügeln, dass das Verbindungsmittel (32) eine Gruppe aus um den Ringzylinder (25) verteilten und zum einen mit dem Übertragungslager (31) und zum anderen mit den jeweils an den Enden der Flügel (16) des Propellers (9) befestigten Drehradialwellen (47) verbundenen Kurbeln (33) umfasst, so dass durch die Verschiebebewegung der Kurbeln des Verbindungsmechanismus (26) die Drehung der Radialwellen und der entsprechenden Flügel bewirkt wird, und dass die Kurbeln (33) an einem Kranz (40) des Verbindungsmittels (32) angelenkt sind, der mit der Drehzylinderwand (38) des Propellers in Drehung und axial frei mit dieser verbunden ist.

2. Strömungsmaschine nach Anspruch 1, wobei das Zwischenübertragungslager (31) des Verbindungsmechanismus (26) ein Kugellager ist, dessen Innenring (35) axial befestigt am beweglichen Teil (29) des Ringzylinders montiert ist, während der Außenring (37) mit dem Verbindungsmittel (32) des in Drehung mit einer am Propeller (9) befestigten Drehzylinderwand (38) verbunden und entlang dieser frei verschiebbar ist, um der Bewegung des Zylinders zu folgen.

3. Strömungsmaschine nach Anspruch 2, wobei das Wälzlager (31) des Lagers eine zweifache Reihe von Kugeln (34) umfasst.

4. Strömungsmaschine nach einem der vorhergehenden Ansprüche, wobei die Kurbeln (33) zum einen am Kranz (40) des Verbindungsmittels (32) und zum anderen an den auf den Drehwellen (47) der Flügel vorgesehenen querliegenden Kurbelzapfen (46) angelenkt sind.

5. Strömungsmaschine nach dem vorhergehenden Anspruch, wobei die Verbindung zwischen dem Kranz (40) des Verbindungsmittels (32) des Mechanismus, in dem sich das Übertragungslager (31) befindet, und der Drehzylinderwand (38) des Propellers durch Nuten (41, 42) parallel zur Achse des Propellers erfolgt.

6. Strömungsmaschine nach einem der Ansprüche 1 bis 5, wobei der Steuerringzylinder (25) im Wesentlichen senkrecht zur Nabe (14) des Propellers (9) angeordnet ist.

7. Strömungsmaschine nach einem der Ansprüche 1 bis 6, wobei der bewegliche (29) und feststehende (27) Teil des Ringzylinders (25) jeweils durch wenigstens eine axiale Stange (39), welche die beiden Teile parallel zum Zylinder durchquert, zueinander gegen Drehen gesichert sind.

8. Strömungsmaschine umfassend zwei gegenläufig jeweils strömungsaufwärts und strömungsabwärts angeordnete Propeller, **dadurch gekennzeichnet, dass** wenigstens der Propeller strömungsaufwärts (9) mit dem System (23) zum Ändern der Steigung der Flügel (16) ausgestattet ist wie nach einem der Ansprüche 1 bis 7 definiert.

## Claims

1. Turbine engine with at least one propeller for an aircraft, of the type comprising a system for changing the pitch of the vanes of said propeller, comprising an annular fluid actuator with linear control that is connected to a fixed housing supporting said propeller, and a linking mechanism linking said actuator to said vanes of said propeller so as to change their orientation, said linking mechanism comprising an intermediate transfer bearing fixed, on one side, to said movable part of said actuator and cooperating, on the other side, with means for linking said mechanism to said vanes of said rotary hub, so that said transfer bearing of said mechanism driven in rotation transfers the translational displacement of said movable part of said fixed actuator to said means for linking said rotary mechanism so as to change the pitch of said vanes of said propeller,
wherein said fixed housing is inside said propeller and close to the longitudinal axis of the turbine engine, opposed to said vanes mounted in an outer rotary hub of said propeller, wherein said linking means comprise a set of connecting rods distributed around said annular actuator and linked, on one side, to said transfer bearing and, on the other side, to radial rotary shafts which are respectively integral with the roots of said vanes of said propeller so as to drive, following the translational displacement of the connecting rods of said linking mechanism, the rotation of the radial shafts and the associated vanes, and wherein said connecting rods are articulated to a ring of said linking means which is rotationally linked to the rotary cylindrical wall of said propeller and axially free therefrom.

2. Turbine engine according to claim 1, wherein said intermediate transfer bearing of said linking mechanism is a ball bearing, the inner ring of which is axially mounted in a connected manner on said movable part of said annular actuator, whereas the outer ring cooperates with said linking means of said mechanism which is rotationally linked to a rotary cylindrical wall integral with said propeller and which is translationally free along said wall, so as to follow the displacement of said actuator.

3. Turbine engine according to claim 2, wherein said ball bearing of said bearing comprises a double row of balls .

4. Turbine engine according to claim 1, wherein said connecting rods are articulated, on the one hand, to said ring of said linking means and, on the other hand, to transverse crank pins provided on said rotary shafts of said vanes.

5. Turbine engine according to the preceding claim, wherein the link between said ring of said linking means of said mechanism, in which said transfer bearing is housed, and said rotary cylindrical wall of said propeller is of the type with splines parallel to the axis of said propeller.

6. Turbine engine according to claim 1, wherein said annular control actuator is arranged substantially directly above with said hub of said propeller.

7. Turbine engine according to claim 1, wherein the respectively movable and fixed parts of said annular actuator are rotationally blocked relative to one another by means of at least one axial rod that passes through the two parts parallel to said actuator.

8. Turbine engine of the type comprising two contra-rotating aligned propellers, upstream and downstream, respectively, **characterised in that** at least the upstream propeller is provided with said system for changing the pitch of said vanes, as defined according to claim 1.
